# EUROPÄISCHE PATENTSCHRIFT

(11) **EP 1 460 798 B1**
(45) Veröffentlichungstag und Bekanntmachung des Hinweises auf die Patenterteilung: **21.12.2005**
(21) Anmeldenummer: 03005943.0
(22) Anmeldetag: 17.03.2003
(51) Int. Cl.: H04L 12/24

(54) **Verfahren und Kommunikationssystem zum Abbrechen von Management-Operationen in einem Managementnetz**
Method and communication system to cancel management operations in a management network
Procédé et système de communication pour arrêter des opérations de gestion dans un réseau de gestion

(43) Veröffentlichungstag der Anmeldung: 22.09.2004
(73) Patentinhaber: SIEMENS AKTIENGESELLSCHAFT, 80333 München (DE)
(72) Erfinder: Hirsch, Lucian, 81373 München (DE)

(56) Entgegenhaltungen:
- ITU-T: "ITU-T RECOMMENDATION X.745 - OSI Management: Test Management Function" ITU-T RECOMMENDATION X.745, [Online] November 1993 (1993-11), Seiten Cover, i, ii, 1-40, XP002249399 Gefunden im Internet: URL:http://www.ihserc.com> [gefunden am 2003-07-29]
- R. ENNS: "XMLCONF Configuration Protocol" IETF INTERNET DRAFT, [Online] 12. Februar 2003 (2003-02-12), XP002249400 Gefunden im Internet: URL:http://www.watersprings.org/pub/id/dra ft-enns-xmlconf-spec-00.txt> [gefunden am 2003-07-29]

## Beschreibung

Die Erfindung betrifft ein Verfahren zum Abbrechen von Management-Operationen zur Netzüberwachung und -kontrolle in einem Managementnetz eines Kommunikationssystems nach dem Oberbegriff des Anspruchs 1.

Die Erfindung betrifft ferner ein Kommunikationssystem mit einem Managementnetz umfassend zumindest einen Manager und zumindest einen Agenten als Einrichtungen in verschiedenen Managementebenen zur Durchführung des Verfahrens.

Die Prinzipien eines Managementnetzes, die auch als TMN-Prinzipien (TMN: Telecommunications Management Network) bezeichnet werden, definieren mehrere Managementschichten für das Management eines Kommunikationssystems - beispielsweise eines Mobil-Kommunikationssystems -, wobei jede Schicht mit Ausnahme der obersten und untersten Schicht eine doppelte Funktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine Agenten-Funktion für die nächsthöhere Schicht zu.

Die ITU-T Standards der Serie X.73x definieren für das Management von Telekommunikations-Netzen verschiedene "Systems Management Functions", die von Applikationsprozessen in einer zentralisierten oder dezentralisierten Management-Umgebung benutzt werden können.

Einerseits starten Manager zur Netzüberwachung und -kontrolle sogenannte Operationen durch Anforderungen (*requests*). Diese werden in Agenten ausgeführt. Anschließend erhalten Manager entsprechende Rückmeldungen (*responses*) von den Agenten.

Andererseits erkennen Agenten relevante Ereignisse (sogenannte *events,* z.B. Alarme) im Netz. Sie generieren Ereignismeldungen (*event reports*) und übertragen diese an Manager, um ein effizientes Netzmanagement zu ermöglichen.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll (z.B. CMIP (Common Management Information Protocol nach ITU-T X.711) oder CORBA (Common Object Request Broker Architecture)) und ein Objektmodell gekennzeichnet werden können.

Solche Schnittstellen gibt es beispielweise zwischen einerseits der Netzeinrichtungsmanagementebene (Network Element Management Level) und andererseits der Netzeinrichtungsebene (Network Element Level). Ein Beispiel für Netzeinrichtungen zu dieser Schnittstelle (OMC-BSS-Schnittstelle) stellen etwa die Betriebs- und Wartungszentren (OMC Operation and Maintenance Center) auf Seite der Netzeinrichtungsmanagementebene (Network Element Management Level) und die Basisstationen des Basisstationssystem (BSS Base Station System) in einem GSM Mobilfunk-Netz auf der Seite der Netzeinrichtungsebene (Network Element Level) dar.

Die erwähnten Schnittstellen existieren aber beispielweise auch zwischen einerseits der Netzmanagementebene (Network Management Level) und andererseits der Netzeinrichtungsmanagementebene (Network Element Management Level). Ein Beispiel für Netzeinrichtungen zu dieser Schnittstelle (NMC-OMC-Schnittstelle) stellen etwa die Netzwerkmanagementzentren (NMC Network Management Center) auf der Seite der Netzmanagementebene (Network Management Level) und die Betriebs- und Wartungszentren (OMC Operation and Maintenance Center) auf der Seite der Netzeinrichtungsmanagementebene (Network Element Management Level) z.B. im genannten GSM Mobilfunk-Netz dar.

In komplexen Telekommunikations-Netzen (und hier vor allem an den NMC-OMC-Schnittstellen) gibt es eine große Anzahl von Netz-Ressourcen, die als Objektinstanzen modelliert werden und entsprechend eine enorm große Menge von Ereignismeldungen generieren können.

Mehrere Manager können parallel laufende Operationen starten, deren Ausführungen im Agent quasi gleichzeitig erfolgen und deshalb längere Zeit in Anspruch nehmen. Das ist z.B. der Fall bei der Synchronisierung von Alarmen oder Zustandsinformationen nach Unterbrechung und Wiederaufbau der Manager-Agent-Schnittstellen oder bei komplexeren Testprozeduren.

Das Managementnetz eines Kommunikationssystems umfasst zumindest einen Manager und zumindest einen Agenten als Einrichtungen in verschiedenen Managementebenen, wobei der zumindest eine Manager zumindest eine Operation mit einer Anforderungsnachricht an den zumindest einen Agenten startet und wobei die zumindest eine Operation dadurch beendet werden kann, dass eine die zumindest eine Operation betreffende Rückmeldung des zumindest einen Agenten an den zumindest einen Manager übermittelt wird.

Eine Operation wird dabei in der Regel regulär dadurch beendet, dass eine die zumindest eine Operation betreffende Rückmeldung des zumindest einen Agenten an den zumindest einen Manager übermittelt wird.

In manchen Fällen kann es für einen Manager aber notwendig sein, eine vorher gestartete und sich für längere Zeit in Ausführung befindende Operation im Agent vorzeitig zu beenden, d.h. sozusagen "irregulär" zu beenden, nämlich ohne die bzw. vor der die Operation betreffende Rückmeldung des Agenten an den Manager.

Beispiele für solche Szenarien sind etwa:
a) Der Manager (NMC) erkennt, dass die gerade laufende Alarm-Synchronisierung an der NMC-OMC-Schnittstelle nicht mehr aktuell ist, da in der Zwischenzeit mehrere OMC-BSS-Schnittstellen ausgefallen sind.
b) Der Manager empfängt eine Ereignismeldung aus der eindeutig ersichtlich ist, dass das jetzt getestete und außer Betrieb gesetzte Bauteil nicht die Ursache für einen Dienstausfall darstellt.

Der Standard ITU-T X.710 ("Open Systems Interconnection - Common Management Information Service") definiert den Dienst M-CANCEL-GET, mit dem eine vorherige M-GET-Anforderung abgebrochen werden kann. Damit kann eine einzige Lese-Operation im Agent vorzeitig beendet werden.

Der Standard ITU-T X.745 ("Systems Management: Test Management Function") definiert eine spezielle ACTION testTerminateAction, mit dem ein laufender Test oder mehrere laufende Tests abgebrochen werden können.

Diese bekannten Maßnahmen sind allerdings nicht geeignet, um Abbruch von mehreren laufenden (d.h. gestarteten, aber nicht durch Rückmeldung als regulär beendet gekennzeichneten) Operationen im Bedarfsfall auf einfache aber effektive Art und Weise zu bewerkstelligen. Das Abbrechen jeder einzelnen Operation durch eine zugehörige Abbruch-Operation gestaltet sich umständlich.

Ein Abbruch der Ausführung auch anderer häufig benutzten Management-Operationen (z.B. Synchronisierung von Alarmen oder Zustandsinformationen) ist nicht standardisiert und kann daher nicht ohne weiteres durchgeführt werden.

Der Erfindung liegt daher die Aufgabe zugrunde, ein Verfahren der eingangs genannten Art und ein Kommunikationssystem zur Durchführung des Verfahrens aufzuzeigen, durch welche die angegebenen Nachteile vermieden werden können und insbesondere eine verbesserte Möglichkeit des Abbruchs von mehreren laufenden, ggf. auch unterschiedlichen Operationen zur Verfügung gestellt werden kann.

Diese Aufgabe wird gemäß der Erfindung hinsichtlich des Verfahrens durch die Merkmale des Patentanspruchs 1 und hinsichtlich des Kommunikationssystems durch die Merkmale des Patentanspruchs 12 gelöst. Weiterbildungen und Ausgestaltungen der Erfindung sind den abhängigen Ansprüchen zu entnehmen.

Erfindungsgemäß erfolgt ein Abbruch einer Mehrzahl von Operationen mittels einer Abbruchnachricht des zumindest einen Managers an den zumindest einen Agenten.

Durch diese Maßnahme wird eine verbesserte und in vielen Fällen auch optimierte Abbruchs-Prozedur für laufende Management-Operationen insbesondere auch für Telekommunikationsnetze ermöglicht.

Das erfindungsgemäße Verfahren ist dabei grundsätzlich für alle Kommunikationsnetze und insbesondere Telekommunikationsnetze (insbesondere drahtlose, aber auch drahtgebundene) einsetzbar.

In der Regel liegen eine Vielzahl von Managern und eine Vielzahl von Agenten vor.

Die Erfindung basiert auf der Idee eines generischen Verfahrens, mittels welchem Management-Operationen (z.B. Synchronisierung von Alarmen oder Zustandsinformationen) bzw. mehrere unterschiedliche Operationen mit einer einzigen Manager-Anforderung abgebrochen werden können. Der Abbruch stellt dabei eine Beendigung mehrerer Operationen vor der regulären Beendigung dieser Operationen, d.h. eine Art vorzeitiges Beenden dieser Operationen gegenüber dem regulären Beenden im Zusammenhang mit einer Rückmeldung an den Manager dar.

Das Verfahren ist grundsätzlich für alle Manager-Agent-Schnittstellen anwendbar. Es wird nachfolgend beispielhaft mit Ausführungen zu einer CMIP-basierten NMC-OMC-Schnittstelle erläutert.

Vorteilhafterweise wird von dem zumindest einen Agenten für jede von ihm auszuführende Operation eine Kennung für die Kommunikation mit dem zumindest einen Manager vergeben. Dies ermöglicht, dass ein Manager nur diejenigen Operationen mittels Abbruch vorzeitig beendet, die vorher von ihm selbst ausgelöst worden sind. Die eindeutige Manager-Identifizierung kann dabei beispielsweise entweder im Abbruchbefehl (Anforderungsnachricht) vorhanden sein oder vom Agent selbst durch Korrelationsinformationen ermittelt werden.

Wenn ein Manager durch Versenden einer Anforderungsnachricht das vorzeitige Ende zumindest eines Teils seiner Management-Operationen fordert, sollte sichergestellt werden, dass diese Anforderungsnachricht der Abbruch-Operation keinen ungewollten Einfluss auf andere (vom gleichen oder von anderen Managern ausgelösten) Operationen im Agent haben. Deshalb kann jede Management-Operation durch eine vom Agent vergebene Kennung an der Manager-Agent-Schnittstelle eindeutig gekennzeichnet werden.

In einer ersten Variante einer Ausgestaltung der Erfindung kann der Abbruch der Mehrzahl von Operationen mittels der Abbruchnachricht des zumindest einen Managers an den zumindest einen Agenten alle von dem zumindest einen Manager gestarteten und noch nicht beendeten Operationen betreffen.

In einer zweiten Variante einer Ausgestaltung der Erfindung kann der Abbruch der Mehrzahl von Operationen mittels der Abbruchnachricht des zumindest einen Managers an den zumindest einen Agenten eine Auswahl der von dem zumindest einen Manager gestarteten und noch nicht beendeten Operationen betreffen.

Die Auswahl kann dabei insbesondere
- aus einer Auswahl einer bestimmten Kategorie von Operationen,
- aus einer Auswahl zumindest einer bestimmten Operations-Kennung (OperationID) innerhalb der ausgewählten Kategorie,
- aus einer Auswahl aller, von dem zumindest einen Manager gestarteten Operationen einer bestimmten Kategorie oder
- aus einer Auswahl mehrerer, von dem zumindest einen Manager gestarteten Operationen unterschiedlicher Kategorien bestehen.

Für die Auswahl der vorzeitig zu beendenden laufenden Operationen stehen dem Manager beispielsweise folgende Optionen zur Verfügung:
- Auswahl einer bestimmten Kategorie von Operationen (z.B. "Alarm-Synchronisierung")
- Auswahl bestimmter Operations-Kennungen (operationIds) innerhalb der ausgewählten Kategorie,
- Auswahl aller, von diesem Manager gestarteten Operationen einer bestimmten Kategorie,
- Auswahl aller, von diesem Manager gestarteten Operationen (auch unterschiedlicher Kategorien).

In Weiterbildung der Erfindung kann die Abbruchnachricht des zumindest einen Managers als Anforderungsnachricht an den zumindest einen Agenten zu einer Abbruch-Operation dienen. Das bedeutet, dass das Abbrechen selbst als Management-Operation behandelt wird und folglich regulär mit einer Übermittlung einer die Abbruch-Operation betreffenden Rückmeldung des zumindest einen Agenten an den zumindest einen Manager beendet wird.

Insbesondere kann die die Abbruch-Operation betreffende Rückmeldung des zumindest einen Agenten Informationen zu dem Status der Abbruch-Operation, zu Kennungen der abgebrochenen Operationen und/oder zu Kennungen der gestarteten und durch die Abbruch-Operation nicht abgebrochenen Operationen umfassen.

Nach vorzeitiger Beendigung durch Abbruch von vom Manager ausgewählten Operationen kann der Agent dem Manager folglich beispielsweise folgende Informationen mitteilen:
- Den Status des Abbruchbefehls,
- Eine Liste der Kennungen für erfolgreich beendete Operationen,
- Eine Liste der Kennungen für jene Operationen, die nicht abgebrochen werden konnten.

Mit Vorteil kann die Abbruchnachricht des zumindest einen Managers an den zumindest einen Agenten
- Parameter-Informationen zum zumindest einen Manager in einer Multi-Manager-Konfiguration,
- Parameter-Informationen zur Kategorie von abzubrechenden Operationen und/oder
- Parameter-Informationen zu Kennungen der im zumindest einen Agenten gestarteten Operationen umfassen.

Die die Abbruch-Operation betreffende Rückmeldung des zumindest einen Agenten kann beispielsweise
- Parameter-Informationen zu abgebrochenen Operationen,
- Parameter-Informationen zu gestarteten und durch die Abbruch-Operation nicht abgebrochenen Operationen und/oder
- Parameter-Informationen zum Ergebnis der gestarteten Abbruch-Operation
umfassen.

Das erfindungsgemäße Kommunikationssystem mit einem Managementnetz umfassend zumindest einen Manager und zumindest einen Agenten als Einrichtungen in verschiedenen Managementebenen dient zur Durchführung des erfindungsgemäßen Verfahrens. Dazu können im Kommunikationssystem und seinen Einrichtungen entsprechende Mittel und Einrichtungen vorgesehen sein.

Nachstehend wird die Erfindung anhand von Ausführungsbeispielen unter Bezugnahme auf die Figuren näher erläutert.

Es zeigen
- Fig. 1: das Blockschaltbild eines Managementnetzes für ein Mobil-Kommunikationssystem mit Agent-Manager-Beziehung zwischen Betriebs- und Wartungszentren und mehreren Netzwerkmanagementzentren,
- Fig. 2: ein Ablauf-Schema einer erfindungsgemäßen Abbruchs-Operation.

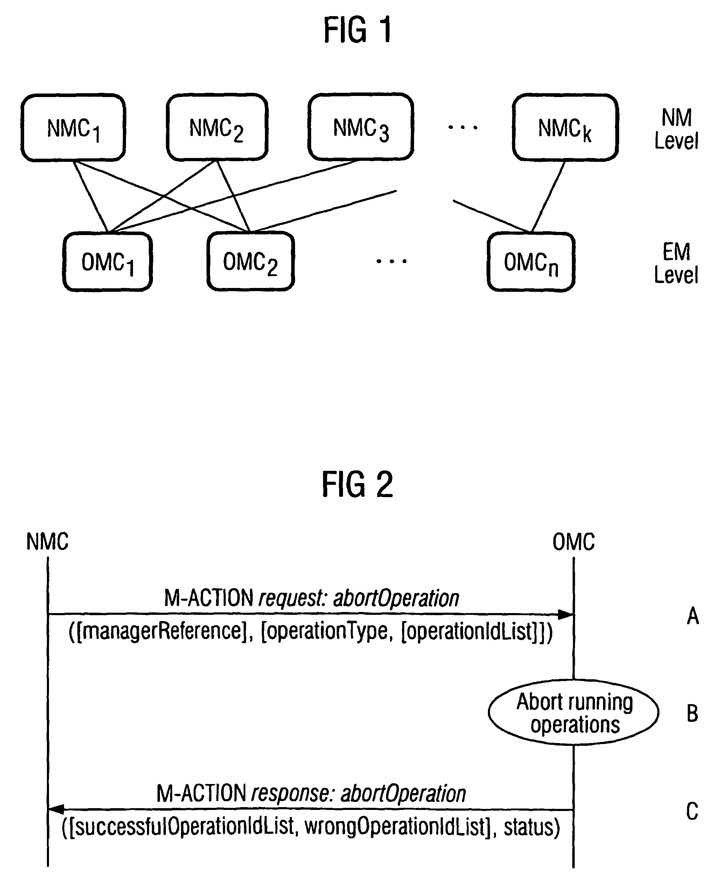

In Figur 1 ist das Blockschaltbild eines Managementnetzes für ein Mobil-Kommunikationssystem mit Agent-Manager-Beziehung zwischen Betriebs- und Wartungszentren OMCs (Operation and Maintenance Centers)und mehreren Netzwerkmanagementzentren NMCs (Network Management Centers) dargestellt. Dabei ist Figur 1 im vorliegenden Fall auf eine Darstellung mit zwei Ebenen NM LEVEL und EM LEVEL beschränkt. Nicht dargestellt ist beispielsweise eine Managementebene des Managementnetzes, welche die Netzeinrichtungsebene ("Network Element Level") mit mehreren Basisstationssystemen enthält.

Die Managementebene EM LEVEL kennzeichnet die Netzeinrichtungsmanagementebene ("Network Element Management Level"), in der Betriebs- und Wartungszentren OMC₁, OMC₂ bis OMCₙ jeweils die herstellerspezifische Managementfunktionalität für beispielsweise nicht in Figur 1 gezeigte einzelne Basisstationen des Basisstationssystems bereitstellen. Die Managementebene NM LEVEL kennzeichnet die Netzwerkmanagementebene ("Network Management Level"), in der Netzwerkmanagementzentren NMC₁, NMC₂, NMC₃ bis NMCₖ jeweils eine integrierte, in der Regel vom Hersteller unabhängige Management-Funktionalität realisieren. Dabei können mehrere Netzwerkmanagementzentren NMC einen Zugriff zu derselben Netzeinrichtung der nächstniedrigeren Managementebene EM LEVEL haben, im vorliegenden Beispiel beispielsweise die Netzmanagementzentren NMC₁ und NMC₂ der nächsthöheren Managementebene NM LEVEL zum Betriebs- und Wartungszentrum OMC₂ der nächstniedrigeren Managementebene EM LEVEL. Zwischen den Netzeinrichtungen unterschiedlicher Managementebenen sind definierte Schnittstellen zur Informationsübertragung vorgesehen.

Figur 2 zeigt ein Ablauf-Schema einer erfindungsgemäßen Abbruchs-Operation.

Die Beschreibung des Verfahrensbeispiels erfolgt anhand einer Q3 (CMIP-basierten)-Schnittstelle. Die Erfindung ist aber auch auf andere Schnittstellen wie beispielsweise CORBAbasierte Schnittstellen anwendbar.

Figur 2 verdeutlicht den Nachrichtenfluss zwischen einem Agent OMC und dem Manager NMC bei Ablauf einer Abbruch-Operation.

In den übermittelten Nachrichten optional enthaltene Parameter sind in Figur 2 zur deutlicheren Kennzeichnung mit eckigen Klammern "[. . .]" angegeben.

Zunächst ist in Schritt A der Start einer Abbruch-Operation mittels einer Abbruchnachricht "M-ACTION *request: abortOpera* tion" des Managers NMC an den Agenten OMC zu betrachten (Manager-Request).

Es wird eine generische Operation *abortOperation* (in Figur 2 so bezeichnet) definiert, die vom Manager an den Agent gesendet wird (z.B. als M-ACTION request für eine CMIP-basierte Management-Schnittstelle) und beispielsweise folgende Parameter enthält:
- Parameter "managerReference"
   Dieser optionale Parameter identifiziert eindeutig in einer Multi-Manager-Konfiguration das Manager-System, das eigene laufende Operationen vorzeitig beendet. Der Parameter wird beispielsweise nur dann benutzt, wenn der aktuelle Manager alle von ihm vorher gestarteten Operationen (unabhängig von der Kategorie) bzw. alle seine Operationen einer bestimmten Kategorie (z.B. alle laufenden Tests) abbrechen soll.
   In einer CMIP-basierten Management-Schnittstelle entspricht dieser Parameter dem "destination"-Attribute der diesem Manager zugeordneten "event forwarding discriminator" (EFD)-Instanz (Destination gemäß ITU-T X:721 "Open Systems Interconnection - Structure of Management Information: Definition of Management Information").
- Parameter "operationType"
   Dieser optionale Parameter identifiziert eindeutig eine Kategorie von Management-Operationen, die vom Manager grundsätzlich abgebrochen werden können (z.B. "Alarm-Synchronisierung", "Synchronisierung von Zustandsinformationen", "Tests").
   In einer CMIP-basierten Management-Schnittstelle entspricht dieser Parameter dem "Object identifier" der abzubrechenden ACTION (ActionTypeId gemäß ITU-T X.711 "Open Systems Interconnection - Common management information protocol: Specification").
   Fehlt dieser Parameter "operationType" in der Abbruchnachricht "M-ACTION *request*: *abortOperation",* kann dies beispielsweise als Indizierung verstanden werden, dass alle laufenden, vom aktuellen Manager gestarteten Operationen (unabhängig von der Kategorie) abgebrochen werden sollen. In diesem Fall wird beispielsweise auch der folgende optionale Parameter "operationIdList" nicht benützt.
- Parameter "operationIdList"
   Dieser optionale Parameter besteht beispielsweise aus einer Liste von einer oder mehreren Kennungen der aktuell im Agent laufenden Operationen (entsprechend der oben genannten Kategorie "operationType"), deren Ausführung abgebrochen wird. Jede Kennung dieser Liste kann einem Manager eindeutig zugeordnet werden.

In einer CMIP-basierten Management-Schnittstelle entspricht dieser Parameter z.B. der "Alarmalignment-Identifizierung" einer abzubrechenden "Alarm-Synchronisierungs"-Prozedur (alignmentId gemäß 3GPP 32.111-4 V5.2.0 "Alarm Integration Reference Point: CMIP solution set") oder der "Test-Identifizierung" eines vorzeitig zu beendenden Tests (test InvocationId gemäß 3GPP 32.324 V5.0.0 "Test Management Integration Reference Point: CMIP solution set" and ITU-T X.745).

Fehlt dieser Parameter in der Abbruchnachricht "M-ACTION *request*: *abortOperation",* kann dies beispielsweise als Indizierung verstanden werden, dass alle laufenden, vom aktuellen Manager getriggerten Operationen entsprechend der Kategorie "operationType" abgebrochen werden sollen.

Anwendungsbeispiele zu der Abbruchnachricht "M-ACTION *request*: *abortOperation"* sind etwa:
a) Ein Manager soll beide von ihm vorher gestarteten "Alarm-Synchronisierungen" abbrechen. Benötigte Parameter in der Abbruchnachricht "M-ACTION *request*: *abortOperation":*
   - Parameter "operationType" = OBJECT IDENTIFIER der ACTION getAlarmList (gemäß 3GPP 32.111-4 V5.2.0)
   - Parameter "operationIdList" = alignmentId1, alignmentId2
b) Ein Manager soll alle von ihm vorher gestarteten Tests abbrechen. Benötigte Parameter in der Abbruchnachricht "M-ACTION *request: abortOperation":*
   - Parameter "managementReference" = "destination" des aktuellen Manager-Systems
   - Parameter "operationType" = OBJECT IDENTIFIER der ACTION testRequestControlledAction (gemäß 3GPP 32.324 V5.0.0)
c) Vor seinem Neustart, soll ein Manager alle von ihm vorher getriggerten Management-Operationen abbrechen. Benötigte Parameter in der Abbruchnachricht "M-ACTION *request*: *abortOperation*":
   - Parameter "managementReference" = "destination" des aktuellen Manager-Systems.

In Schritt B von Figur 2 ist im zeitlichen Verlauf der Abbruch-Operation mit "Abort running operations" das Ablaufen der Operation im Agenten OMC gemäß den Parametern aus der Abbruchnachricht "M-ACTION *request*: *abortOperation"* verdeutlicht.

Nach Bearbeitung der Abbruchnachricht (abortOperation-Anforderung) sendet der Agent OMC eine entsprechende Antwort an den Manager NMC (z.B. als M-ACTION response für eine CMIP-basierte Management-Schnittstelle).

Schritt C zeigt die Beendigung der Abbruch-Operation mit der Übermittlung einer die Abbruch-Operation betreffenden Rückmeldung "M-ACTION *response*: *abortOperation*" des Agenten OMC an den Manager NMC (Agent-Response), die beispielsweise folgende Parameter enthält:
- Parameter "successfulOperationIdList" Dieser optionale Parameter wird z.B. vom Agent OMC nur dann verwendet, wenn nicht alle in der abortOperation-Anforderung (z.B. Abbruchnachricht "M-ACTION *request*: *abortOperation*") mit Parameter "operationIdList" vom Manager definierten Operationen vorzeitig beendet werden konnten.
- Parameter "wrongOperationIdList"
   Dieser optionale Parameter wird beispielsweise nur zusammen mit dem oben genannten Parameter "successfulOperationIdList" verwendet und gibt an, welche vom Manager definierten Operationen nicht abgebrochen werden können. Das kann z.B. der Fall sein, wenn eine Operations-Kennung in der *abortOperation*-Anforderung falsch war oder die Ausführung einer ausgewählten Management-Operation kurz vorher im Agent OMC regulär beendet wurde.
- Parameter "status"
   Dieser Parameter gibt das Ergebnis der *abortOperation*-Anforderung an.
   Mögliche Werte sind dabei beispielsweise:
   ■ *successful (0)*:
      Alle vom Manager definierten Operationen wurden vorzeitig beendet.
   ■ *partly successful (1)*:
      Einige Operationen konnten nicht abgebrochen werden. Nur in diesem Fall enthält beispielsweise die Antwort die optionalen Parameter "successfulOperationIdList" und "wrongOperationIdList".
   ■ *error (2)*:
      Keine der vom Manager definierten Operationen konnte vorzeitig beendet werden.

Wie das Ausführungsbeispiel verdeutlicht, können mit dem erfindungsgemäßen Verfahren folgende Vorteile erreicht werden:
- Die Erfindung definiert ein generisches Verfahren, um mit einer einzigen Manager-Anforderung mehrere, auch unterschiedliche Operationen im Agent vorzeitig zu beenden.
- Eine Manager-Anforderung zum vorzeitigen Abbruch eigener vorher gestarteten Operationen hat keinen Einfluss auf Management-Operationen, die von anderen Managern gestartet wurden.
- Nach Ausführung des Abbruch-Befehls im Agent erhält der Manager genaue Informationen auch über die gegebenenfalls nicht vorzeitig beendeten Management-Operationen.

## Patentansprüche

1. Verfahren zum Abbrechen von Mangement-Operationen zur Netzüberwachung und -kontrolle in einem Managementnetz eines Kommunikationssystems,
wobei das Managementnetz zumindest einen Manager (NMC) und zumindest einen Agenten (OMC) als Einrichtungen in verschiedenen Managementebenen (NM level, EM level) umfasst,
wobei der zumindest eine Manager (NMC) zumindest eine Operation mit einer Anforderungsnachricht (M-ACTION *request*) an den zumindest einen Agenten (OMC) startet,
wobei die zumindest eine Operation **dadurch** beendet werden kann, dass eine die zumindest eine Operation betreffende Rückmeldung (M-ACTION *response*) des zumindest einen Agenten (OMC) an den zumindest einen Manager (NMC) übermittelt wird,
**dadurch gekennzeichnet,**
**dass** eine Abbruchnachricht (M-ACTION *request*: *abortOperation*) von dem zumindest einen Manager (NMC) an den zumindest einen Agenten (OMC) gesendet wird, welche
• anzeigt, dass es sich bei der abzubrechenden Operation um eine Alarmsynchronisierung handelt, und
• Identifikationsinformationen der abzubrechenden Alarmsynchronisierung beinhaltet.

2. Verfahren nach Anspruch 1, **dadurch gekennzeichnet,**
**dass** die Abbruchnachricht (M-ACTION *request: abortOpera*tion) eine Mehrzahl von Operationen betrifft, und
**dass** der Abbruch der Mehrzahl von Operationen mittels der Abbruchnachricht (M-ACTION *request: abortOperation)* des zumindest einen Managers (NMC) an den zumindest einen Agenten (OMC) ausschließlich von dem zumindest einen Manager (NMC) gestartete Operationen betrifft, indem die Abbruchnachricht (M-ACTION *request*: *abortOperation*) Identifikationsinformation (managerReference) des zumindest einen Managers (NMC) enthält.

3. Verfahren nach Anspruch 2, **dadurch gekennzeichnet,**
**dass** von dem zumindest einen Agenten (OMC) für jede von ihm auszuführende Operation eine Kennung (*OperationID*) für die Kommunikation mit dem zumindest einen Manager (NMC) vergeben wird.

4. Verfahren nach einem der Ansprüche 1 bis 3, **dadurch gekennzeichnet,**
**dass** die Abbruchnachricht (M-ACTION *request: abortOperation*) eine Mehrzahl von Operationen betrifft und dass der Abbruch der Mehrzahl von Operationen mittels der Abbruchnachricht (M-ACTION *request: abortOperation*) des zumindest einen Managers (NMC) an den zumindest einen Agenten (OMC) alle von dem zumindest einen Manager (NMC) gestarteten und noch nicht beendeten Operationen betrifft, indem die Abbruchnachricht (M-ACTION *request*: *abortOperation*) Identifikationsinformation (managerReference) des zumindest einen Managers (NMC) enthält.

5. Verfahren nach einem der Ansprüche 1 bis 3, **dadurch gekennzeichnet,**
**dass** die Abbruchnachricht (M-ACTION *request*: *abortOperation*) eine Mehrzahl von Operationen betrifft und dass der Abbruch der Mehrzahl von Operationen mittels der Abbruchnachricht (M-ACTION *request: abortOperation)* des zumindest einen Managers (NMC) an den zumindest einen Agenten (OMC) eine Auswahl der von dem zumindest einen Manager (NMC) gestarteten und noch nicht beendeten Operationen betrifft, wobei die Auswahl in der Abbruchnachricht (M-ACTION *request*: *abortOperation*) angezeigt ist.

6. Verfahren nach einem der Anspruch 5, **dadurch gekennzeichnet,**
**dass** die Auswahl
- aus einer Auswahl einer bestimmten Kategorie von Operationen,
- aus einer Auswahl zumindest einer bestimmten Operations-Kennung (*OperationID*) innerhalb der ausgewählten Kategorie,
- aus einer Auswahl aller, von dem zumindest einen Manager (NMC) gestarteten Operationen einer bestimmten Kategorie oder
- aus einer Auswahl mehrerer, von dem zumindest einen Manager (NMC) gestarteten Operationen unterschiedlicher Kategorien besteht.

7. Verfahren nach einem der Ansprüche 1 bis 6, **dadurch gekennzeichnet,**
**dass** die Abbruchnachricht (M-ACTION *request: abortOpera* tion) des zumindest einen Managers (NMC) als Anforderungsnachricht (M-ACTION *request*) an den zumindest einen Agenten (OMC) zu einer Abbruch-Operation (*abortOperation*) dient.

8. Verfahren nach Anspruch 7, **dadurch gekennzeichnet,**
**dass** die die Abbruch-Operation *(abortOperation)* betreffende Rückmeldung (M-ACTION *response*: *abortOperation*) des zumindest einen Agenten (OMC) Informationen zu dem Status der Abbruch-Operation (*abortOperation*) umfasst.

9. Verfahren nach Anspruch 8, **dadurch gekennzeichnet,**
**dass** die die Abbruch-Operation (*abortOperation*) betreffende Rückmeldung (M-ACTION *response*: *abortOperation*) des zumindest einen Agenten (OMC) Informationen zu Kennungen (*OperationID*) eines oder mehrerer abgebrochener Operationen und/oder zu Kennungen (*OperationID*) eines oder mehrerer gestarteter und durch die Abbruch-Operation nicht abgebrochenen Operationen umfasst.

10. Verfahren nach einem der Ansprüche 1 bis 9, **dadurch gekennzeichnet,**
**dass** die Abbruchnachricht (M-ACTION *request: abortOperation*) des zumindest einen Managers (NMC) an den zumindest einen Agenten (OMC)
- Parameter-Informationen (managerReference) zum zumindest einen Manager (NMC) in einer Multi-Manager-Konfiguration,
- Parameter-Informationen (operationType) von zumindest einer Kategorie von abzubrechenden Operationen und/oder
- Parameter-Informationen (operationIdList) zu Kennungen *(OperationID)*von zumindest einer im zumindest einen Agenten (OMC) gestarteten Operationen umfasst.

11. Verfahren nach Anspruch 9 und 10, **dadurch gekennzeichnet,**
**dass** die die Abbruch-Operation (*abortOperation*) betreffende Rückmeldung (M-ACTION *response*: *abortOperation*) des zumindest einen Agenten (OMC)
- Parameter-Informationen (successfulOperationIdList) zu mindestens einer abgebrochenen Operation,
- Parameter-Informationen (wrongOperationIdList) zu mindestens einer gestarteten und durch die Abbruch-Operation nicht abgebrochenen Operation und/oder
- Parameter-Informationen (status) zum Ergebnis der gestarteten Abbruch-Operation *(abortOperation)* umfasst.

12. Kommunikationssystem mit einem Managementnetz umfassend zumindest einen Manager (NMC) und zumindest einen Agenten (OMC) als Einrichtungen in verschiedenen Managementebenen (NM level, EM level) ausgestaltet zur Durchführung des Verfahrens nach einem der vorangehenden Ansprüche 1 bis 11.

## Claims

1. Method for cancelling management operations for network supervision and control in a management network of a communications system,
with the management network comprising at least one manager (NMC) and at least one agent (OMC) as elements at different management levels (NM level, EM level),
with the at least one manager (NMC) starting at least one operation with a request message (M-ACTION request) to the at least one agent (OMC), with the at least one operation being able to be ended by the response (M-ACTION response) relating to the at least one operation being transferred by the at least one agent (OMC) to the at least one manager (NMC),
**characterized in that**
a cancel message (M-ACTION request: abortOperation) is sent by the at least one manager (NMC) to the at least one agent (OMC) which
• indicates that the operation to be aborted is an alarm synchronization, and
• contains identification information for the alarm synchronization to be aborted.

2. Method in accordance with claim 1, **characterized in that**, the cancel message (M-ACTION request: abortOperation) relates to a plurality of operations, and
the cancellation of the plurality of operations by means of the cancel message (M-ACTION request: abortOperation) from the at least one manager (NMC) to the at least one agent (OMC) relates exclusively to operations started by the at least one manager (NMC), **in that** the cancel message (M-ACTION request: abortOperation) contains identification information (managerReference) of the at least one manager (NMC).

3. Method in accordance with claim 2, **characterized in that**, an identification is issued by the at least one agent (OMC) for a for each operation that it is to execute (OperationID) for communication with the at least one manager.

4. Method in accordance with one of the claims 1 to 3,
**characterized in that**
the cancel message (M-ACTION request: abortoperation) relates to a plurality of operations and that the cancellation of the plurality of operations by means of the cancel message (M-ACTION request: abortOperation) from the at least one manager (NMC) to the at least one agent (OMC) relates to all of the operations started by the at least one manager (NMC) and not yet ended, **in that** the cancel message (M-ACTION request: abortOperation) contains identification information (managerReference) of the at least one manager (NMC).

5. Method in accordance with one of the claims 1 to 3,
**characterized in that**
the cancel message (M-ACTION request: abortOperation) relates to a plurality of operations and that the cancellation of the plurality of operations by means of the cancel message (M-ACTION request: abortOperation) of the at least one manager (NMC) to the at least one agent (OMC) relates to a selection of the operations started and not yet ended by the at least one manager (NMC), with the selection being indicated in the cancel message (MACTION request: abortOperation).

6. Method in accordance with claim 5, **characterized in that**,
the selection consists of
- a selection of a specific category of operations,
- a selection of at least one specific operation identification (OperationlD) within the selected category,
- a selection of all operations started by the at least one manager (NMC) of a specific category or
- a selection of a number of operations of different categories started by the at least one manager (NMC).

7. Method in accordance with one of the claims 1 to 6,
**characterized in that**
the cancel message (M-ACTION request: abortOperation) of the at least one manager (NMC) serves as a request message (M-ACTION request) to the at least one agent (OMC) for an abort operation (abortOperation).

8. Method in accordance with claim 7, **characterized in that**, the response (M-ACTION response: abortOperation) relating to the abort operation (abortOperation) of the at least one agent (OMC) comprises information about the status of the abort operation (abortOperation).

9. Method in accordance with claim 8, **characterized in that**, the response (M-ACTION response: abortOperation) relating to the abort operation (abortOperation) of the at least one agent (OMC) comprises information about identifications (OperationlD) of one or more aborted operations and/or about identifications (OperationlD) of one or more operations started and not aborted by the abort operation.

10. Method in accordance with one of the claims 1 to 9,
**characterized in that**
the cancel message (M-ACTION request: abortOperation) of the at least one manager (NMC) to the at least one agent (OMC) comprises
- parameter information (managerReference) for at least one manager (NMC) in a multi-manager configuration,
- parameter information (operationType) of at least one category of operations to be aborted and/or
- parameter information (operationIdList) for identifications (OperationeD) of the operations started in at least one agent (OMC).

11. Method in accordance with claim 9 and 10,
**characterized in that**,
the response (M-ACTION response: abortOperation) of the at least one agent (OMC) relating to the abort operation (abortOperation) comprises
- parameter information (successfulOperationIdList) about the at least one aborted operation,
- parameter information (wrongOperationIdList) about at least one operation started and not aborted by an abort operation and/or
- parameter information (status) about the result of the started abort operation (abortOperation).

12. Communication system with a management network comprising at least one manager (NMC) and at least one agent (OMC) as elements at different management levels (NM level, EM level) equipped to execute the method in accordance with one of the previous claims 1 to 11.

## Revendications

1. Procédé pour arrêter des opérations de gestion pour la surveillance et le contrôle de réseau dans un réseau de gestion d'un système de communication,
le réseau de gestion comprenant au moins un gestionnaire (NMC) et au moins un agent (OMC) en tant qu'équipements dans différents niveaux de gestion (NM level, EM level),
l'au moins un gestionnaire (NMC) lançant au moins une opération avec un message de requête (M-ACTION request) à l'au moins un agent (OMC),
l'au moins une opération pouvant être terminée par transmission, à l'au moins un gestionnaire (NMC), d'une réponse (M-ACTION *response*) de l'au moins un agent (OMC) concernant l'au moins une opération,
**caractérisé en ce que**
un message d'arrêt (M-ACTION *request: abortOperation)* est envoyé par l'au moins un gestionnaire (NMC) à l'au moins un agent (OMC), lequel
• indique que l'opération à arrêter est une synchronisation d'alarme et
• contient des informations d'identification de la synchronisation d'alarme à arrêter.

2. Procédé selon la revendication 1, **caractérisé en ce que**
le message d'arrêt (M-ACTION *request*: *abortOperation*) concerne une pluralité d'opérations et
l'arrêt de la pluralité d'opérations au moyen du message d'arrêt (M-ACTION *request: abortOperation)* de l'au moins un gestionnaire (NMC) à l'au moins un agent (OMC) concerne exclusivement des opérations lancées par l'au moins un gestionnaire (NMC), dans lequel le message d'arrêt (M-ACTION *request*: *abortOperation*) contient une information d'identification (managerReference) de l'au moins un gestionnaire (NMC).

3. Procédé selon la revendication 2, **caractérisé en ce**
**qu**'un identificateur (*OperationID*) pour la communication avec l'au moins un gestionnaire (NMC) est attribué par l'au moins un agent (OMC) pour chaque opération qu'il doit exécuter.

4. Procédé selon l'une des revendications 1 à 3, **caractérisé en ce**
**que** le message d'arrêt (M-ACTION *request: abortOperation*) concerne une pluralité d'opérations et en ce que l'arrêt de la pluralité d'opérations au moyen du message d'arrêt (M-ACTION *request*: *abortOperation*) de l'au moins un gestionnaire (NMC) à l'au moins un agent (OMC) concerne toutes les opérations lancées par l'au moins un gestionnaire (NMC) et non encore terminées, dans lequel le message d'arrêt (M-ACTION *request: abortOperation*) contient une information d'identification (managerReference) de l'au moins un gestionnaire (NMC).

5. Procédé selon l'une des revendications 1 à 3, **caractérisé en ce**
**que** le message d'arrêt (M-ACTION *request: abortOperation*) concerne une pluralité d'opérations et en ce que l'arrêt de la pluralité d'opérations au moyen du message d'arrêt (M-ACTION *request: abortOperation*) de l'au moins un gestionnaire (NMC) à l'au moins un agent (OMC) concerne une sélection des opérations lancées par l'au moins un gestionnaire (NMC) et non encore terminées, la sélection étant indiquée dans le message d'arrêt (M-ACTION *request*: *abortOperation*)*.*

6. Procédé selon la revendication 5, **caractérisé en ce**
**que** la sélection se compose
- d'une sélection d'une catégorie déterminée d'opérations,
- d'une sélection d'au moins un identificateur d'opération déterminé (*OperationID*) à l'intérieur de la catégorie sélectionnée,
- d'une sélection de toutes les opérations d'une catégorie déterminée qui ont été lancées par l'au moins un gestionnaire (NMC) ou
- d'une sélection de plusieurs opérations de catégories différentes, lancées par l'au moins un gestionnaire (NMC).

7. Procédé selon l'une des revendications 1 à 6, **caractérisé en ce**
**que** le message d'arrêt (M-ACTION *request*: *abortOperation*) de l'au moins un gestionnaire (NMC) sert de message de requête (M-ACTION request) à l'au moins un agent (OMC) pour une opération d'arrêt (*abortOperation*).

8. Procédé selon la revendication 7, **caractérisé en ce**
**que** la réponse (M-ACTION *response*: abortOperation) de l'au moins un agent (OMC) concernant l'opération d'arrêt *(abortOperation)* comprend des informations concernant le statut de l'opération d'arrêt (*abortOperation*)*.*

9. Procédé selon la revendication 8, **caractérisé en ce**
**que** la réponse (M-ACTION *response*: *abortOperation*) de l'au moins un agent (OMC) concernant l'opération d'arrêt *(abortOperation)* comprend des informations concernant des identificateurs (*OperationID*) de l'une ou de plusieurs opérations arrêtées et/ou concernant des identificateurs (*OperationID*) de l'une ou de plusieurs opérations lancées et non arrêtées par l'opération d'arrêt.

10. Procédé selon l'une des revendications 1 à 9, **caractérisé en ce**
**que** le message d'arrêt (M-ACTION *request*: *abortOperation*) de l'au moins un gestionnaire (NMC) à l'au moins un agent (OMC) comprend
- des informations paramétriques (managerReference) concernant l'au moins un gestionnaire (NMC) dans une configuration multigestionnaire,
- des informations paramétriques (operationType) d'au moins une catégorie d'opérations à arrêter et/ou
- des informations paramétriques (operationIdList) concernant des identificateurs (*OperationID*) d'au moins une opération lancée dans l'au moins un agent (OMC).

11. Procédé selon la revendication 9 et 10, **caractérisé en ce**
**que** la réponse (M-ACTION *response*: *abortOperation*) de l'au moins un agent (OMC) concernant l'opération d'arrêt (*abortOperation*) comprend
- des informations paramétriques (successfulOperationIdList) concernant au moins une opération arrêtée,
- des informations paramétriques (wrongOperationIdList) concernant au moins une opération lancée et non arrêtée par l'opération d'arrêt et/ou
- des informations paramétriques (status) concernant le résultat de l'opération d'arrêt (*abortOperation*) lancée.

12. Système de communication avec un réseau de gestion comprenant au moins un gestionnaire (NMC) et au moins un agent (OMC) en tant qu'équipements dans différents niveaux de gestion (NM level, EM level), équipé pour la mise en oeuvre du procédé selon l'une des revendications précédentes 1 à 11.
